(19) Europäisches Patentamt

European Patent Office

Office européen des brevets

(11) **EP 1 669 740 A1**

(12) **EUROPEAN PATENT APPLICATION**

(43) Date of publication:
**14.06.2006 Bulletin 2006/24**

(51) Int Cl.:
***G01N 21/64*** (2006.01)     ***G02B 21/00*** (2006.01)

(21) Application number: **05026864.8**

(22) Date of filing: **08.12.2005**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **10.12.2004 JP 2004359138**<br>        **03.03.2005 JP 2005059536**<br><br>(71) Applicant: **Olympus Corporation**<br>**Tokyo 151-0072 (JP)** | (72) Inventors:<br>• **Yamashita, Yusuke**<br>  **Hachioji-shi**<br>  **Tokyo 192-0032 (JP)**<br>• **Nakata, Tatsuo**<br>  **Hino-shi**<br>  **Tokyo 191-0024 (JP)**<br>• **Suzuki, Shingo**<br>  **Nagano 396-0011 (JP)**<br><br>(74) Representative: **von Hellfeld, Axel**<br>**Wuesthoff & Wuesthoff**<br>**Patent- und Rechtsanwälte**<br>**Schweigerstrasse 2**<br>**81541 München (DE)** |

(54) **Microscope apparatus, sensitivity setting method for photo detector, control unit, and storage medium**

(57)     Light emitted from a light source is condensed and a sample is irradiated by the condensed beam by an optical system. The light emitted from the sample because of the irradiation is incident on a light detection unit via a wavelength selective optical device having different transmittances depending on wavelengths, a dispersive unit for spectrally resolving light, a wavelength range selection unit for selecting light having a wavelength in a prescribed wavelength range among the light resolved spectrally. A correction unit adjusts a light intensity signal output from the light detection unit based on at least one of a wavelength characteristics of the wavelength selective optical device and the light detection unit respectively.

**Description**

**Background of the Invention**

**Field of the Invention**

The present invention relates to a technique for appropriately conducting spectrometry on a sample using light having a wavelength in a desired wavelength range.

**Description of the Related Art**

There is a confocal scanning microscope apparatus as a type of microscope apparatus. In the confocal scanning microscope apparatus, a scanning optical system scans a sample two-dimensionally with light such as that of a laser beam or the like, and causes reflected light, transmitted light, or fluorescence from the sample to be incident on a light detection unit. Thereby, a light intensity signal that the light detection unit outputs in accordance with an intensity of light is obtained as luminance information of the sample. An image of the sample is observed by displaying the luminance information as a two dimensional distribution of luminance on a display device such as a CRT display or the like.
In the confocal scanning microscope apparatus such as above, light with directivity such as a laser beam or the like is condensed and a sample is irradiated with pinpoint accuracy, thereby, scattered light not coming from the measured point on which light is condensed is suppressed. Also, a pinhole (confocal pinhole) arranged as a spatial filter at a stage earlier than the light detection unit is conjugate to the measuring point. By the confocal pinhole, reflected light, transmitted light, or fluorescence not from the measuring point is prevented from passing, and accordingly, it is possible that only one point in the three-dimensional space be measured. In the case of observing fluorescence which is frequently used for observing a biological 1 sample or the like, a transmissive filter which is transmissive for light having a particular wavelength is generally arranged at a stage earlier than the pinhole, and only the light which has been transmitted through the filter is incident on the pinhole.
In a confocal scanning microscope apparatus for conducting spectrometry, light which is transmitted through a confocal pinhole is spectrally resolved by a dispersive device. Of the spectral array generated by the dispersive device, only light having a wavelength in a desired wavelength range is extracted by employing an adjustable aperture device (slit), is incident on the light detection unit, and is converted into a light intensity signal which expresses an image of the sample. In this manner, only the light having a wavelength in a desired wavelength range is detected from the light obtained from the sample. By controlling a position (direction) of the dispersive device, a position/width of an aperture of the adjustable aperture device, it is possible to detect light having an arbitrary wavelength and to acquire an image of the sample.
One of the conventional microscope apparatus having a function of the above spectrometry is disclosed in Japanese Patent Application Publication No. 2004-212600. In the above conventional microscope apparatus disclosed in this document, a spectral array is generated by dispersing light from a sample by a diffraction grating. Then, the center wavelength in the wavelength range for detection is selected in accordance with a rotation angle of a planar diffraction grating, and the light having a predetermined bandwidth including the center wavelength is detected by a light detection unit. The light intensity signal obtained as above is corrected based on a correction value in accordance with the rotation angle of the diffraction grating. Thereby, the variation of the diffraction efficiency which is caused depending on the rotation angle of the diffraction grating is suppressed and accuracy of spectrometry is improved.
Japanese Patent Application Publication No. 2002-287034 discloses a conventional microscope apparatus that conducts spectrometry of a sample prepared with multiple stains with a smaller number of light detection units. In this microscope apparatus, a sample prepared with multiple stains is irradiated by laser beams having excitation wavelengths $\lambda 1$, $\lambda 2$ and $\lambda 3$, fluorescences having wavelengths $\lambda 1'$, $\lambda 2'$ and $\lambda 3'$ coming from the sample are caused to be incident on one barrier filter having a characteristic of transmitting light of these wavelengths, and one light detection unit detects the fluorescence that has been transmitted through the filter. An image of the sample for each of the excitation wavelengths $\lambda 1$, $\lambda 2$ and $\lambda 3$ is formed based on the light intensity signal output from the light detection unit, and by synthesizing the formed images, the image of the sample prepared with multiple stains is acquired.
In the case of observing the fluorescence from the biological sample or the like, in order to detect weak fluorescence with a high sensitivity, a photomultiplier is generally employed as the light detection unit.
The photomultiplier is suitable for detecting fluorescence incident on the photomultiplier with intensity which is variable in accordance with variation of the above sample and laser beam by which the sample is irradiated because, light sensitivity of the photomultiplier can be changed by changing an applied voltage thus changing a photoelectric conversion efficiency.
However, the sensitivity of the photomultiplier has to be changed in accordance with the amount of the detected fluorescence from the sample. In order to optimize a luminance level of an image, adjustment operations or the like are required in which an operator sets a voltage applied to the photomultiplier to a high value when an intensity of fluorescence is low, and sets the voltage applied to the photomultiplier to a low value when the intensity of fluorescence is high.

It is also known generally that the photomultiplier has a wavelength sensitivity characteristic that varies in accordance with a wavelength of received fluorescence. Thus it is required that, for the optimization, the voltage applied to the photomultiplier is set to a low value for a wavelength range for which the sensitivity is high, and voltage applied to the photomultiplier is set to a high value for a wavelength range for which the sensitivity is low, even when the intensity of the fluorescence to be detected is constant.

Japanese Patent Application Publication No. 2001-59939 discloses a technique in which a difference of luminance levels of a scanned image made by individual differences of sensitivities of the photomultipliers is adjusted by changing reference values of a voltage applied to the photomultipliers in a laser scanning microscope apparatus.

## Summary of the Invention

A microscope apparatus according to a first aspect of the present invention, comprises a light source, an optical system for condensing light emitted from the light source on a sample, for irradiating the sample by the beam and for causing light from the sample obtained by the irradiation to be incident on a light detection unit, and a correction unit for adjusting a light intensity signal output from the light detection unit based on at least one of a wavelength characteristic of the wavelength selective optical device and the light detection unit respectively. The wavelength selective optical device has variable transmittance depending on wavelength, for only transmitting light having a wavelength in a specified wavelength range of the light from the sample. The optical system further comprises a dispersive unit for spectrally resolving light from the sample, and a wavelength range selection unit for selecting light having a wavelength in a prescribed wavelength range of the light resolved spectrally by the dispersive unit.

It is desirable that the above correction unit is a light intensity signal adjustment unit for executing a correction process on a light intensity signal output from the light detection unit based on at least one of a wavelength characteristics of the wavelength selective optical device and the light detection unit respectively.

The microscope apparatus according to a second aspect of the present invention comprises an optical system having a scan unit for relatively moving a condensed beam in a direction crossing an optical axis over the sample as the above optical system, and further comprises a scan adjustment unit for adjusting a scanning velocity of the scan unit based on at least one of setting information of the wavelength range selection unit and intensity information of light obtained from the sample in addition to the configuration of the first aspect.

The microscope apparatus according to a third aspect of the present invention, further comprises a sensitivity adjustment unit for adjusting detection sensitivity of the light detection unit, and a storage unit for storing wavelength sensitivity characteristic data of the light detection unit in addition to the configuration of the first aspect, and in the above microscope apparatus, the correction unit is a sensitivity setting unit for setting, in the sensitivity adjustment unit, detection sensitivity which flattens wavelength sensitivity characteristic of the light detection unit based on the wavelength sensitivity characteristic data of the light detection unit in the wavelength range selected by the wavelength range selection unit.

## Brief Description of the Drawings

The present invention will be more apparent from the following detailed description when the accompanying drawings are referenced.

Fig. 1 shows a configuration of a microscope apparatus according to a first embodiment of the present invention;
Fig. 2 explains a configuration cf a first detection unit 228;
Fig. 3 is a flowchart of image display processes;
Fig. 4 explains an example of a wavelength characteristic.of a dichroic mirror 221;
Fig. 5 explains corrections of a light intensity signal;
Fig. 6 explains an example of a wavelength characteristic of a photoelectric conversion device;
Fig. 7A explains a variation of an amount of light incident on a photoelectric conversion device 228c in accordance with an aperture width of a slit 228b;
Fig. 7B explains the variation of the amount of light incident on the photoelectric conversion device 228c in accordance with a scanning velocity;
Fig. 8 is a flowchart of image acquisition processes (fourth embodiment);
Fig. 9 is a flowchart of image acquisition processes (fifth embodiment);
Fig. 10 explains a difference between wavelength characteristics depending on reagents;
Fig. 11 shows a configuration of a microscope apparatus according to a sixth embodiment of the present invention;
Fig. 12 is a block diagram showing a more detailed configuration of a computer 10 and a storage unit 11 of Fig. 11;
Fig. 13 shows an example of a wavelength characteristic of fluorescence of a fluorescence reagent (FITC) applied to a sample;

Fig. 14 is a flowchart showing processes of setting a voltage applied to a photomultiplier according to the sixth embodiment;

Fig. 15 is a block diagram showing a more detailed configuration of the computer 10 and the storage unit 11 in Fig. 11 according to a seventh embodiment;

Fig. 16 is a flowchart showing processes of setting a voltage applied to the photomultiplier according to the seventh embodiment; and

Fig. 17 shows an example of a storage medium storing a program for causing a computer to execute the operations for realizing the present embodiment.

## Description of the Preferred Embodiment

Hereinafter, embodiments of the present invention will be explained by referring to the drawings.

<First Embodiment>

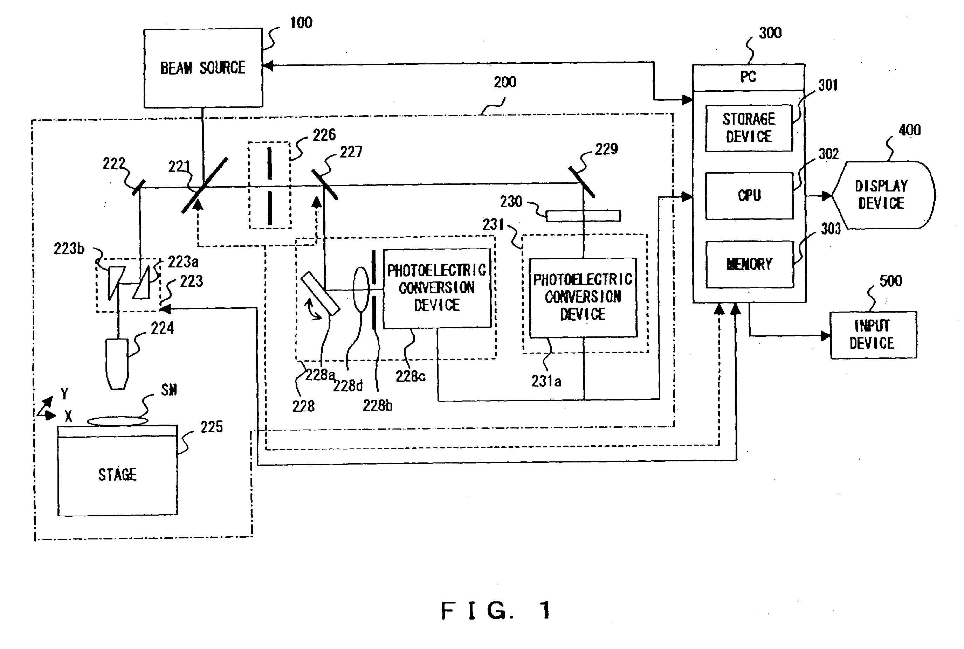

Fig. 1 shows a configuration of a microscope apparatus according to a first embodiment of the present invention.

In the first embodiment, the present invention is applied to a confocal laser scanning microscope apparatus as a microscope apparatus, and the microscope apparatus according to the first embodiment comprises a light source 100 for emitting a laser beam, a microscope apparatus body 200, a personal computer (hereinafter, referred to as "PC") 300 as a control device for the above components, a display device 400 for displaying image data output from the PC 300, an input device 500 whose examples include a keyboard, a pointing device such as, e.g., a mouse, and the like. The control device in the first embodiment is realized as the PC 300 connected to the body 200.

The above PC 300 to which the display device 400 and the input device 500 are connected comprises a storage device 301 which is a hard disk device for example, a CPU 302 for controlling the entirety, and memory 303 used for the processing by the CPU 302. Operations of the microscope apparatus as the control device are realized by the CPU 302 reading a program for control functions from the storage device 301 and executing the read functions. It is also possible that the above program is obtained from an optical disk device or a communication control device for conducting communications via a communication network, which are included in or connected to the computer, neither of which is shown in any drawing.

The above input device 500 is operated by a user in order to input various instructions or data. Accordingly, the CPU 302 monitors the operations that the user conducts on the input device 500, and conducts a control for realizing the requests made via the operations.

In the microscope apparatus body 200, a laser beam emitted from the light source 100 is reflected respectively by a dichroic mirror 221 and a mirror 222, and is incident on a scanning optical unit 223. The scanning optical unit 223 comprises scanning mirrors 223a and 223b, and these mirrors 223a and 223b deflect the laser beam. The deflected laser beam is incident on an objective lens 224 and is condensed on a sample SM, and the sample SM mounted on a stage 225 is irradiated by the laser beam. When irradiated by the beam, the fluorescence reagent is excited and fluorescence is emitted.

The fluorescence emitted from the sample SM is incident on the dichroic mirror 221 via the objective lens 224, the scanning optical unit 223 and the mirror 222, which is the reverse order to that of the incidence of the laser beam on the sample. The dichroic mirror 221 reflects light having a particular wavelength, and is transmissive for light other than the above light having the particular wavelength. Due to this characteristic, the laser beam emitted from the light source 100 is reflected and the fluorescence from the sample 5M is transmitted. The transmitted fluorescence is detected by a detection system.

The detection system comprises a confocal pinhole 226, mirrors 227 and 229, a photometric filter 230, a first detection unit 228 and a second detection unit 231. The first detection unit 228 comprises a dispersive device 228a, a lens 228d, a slit 228b and a photoelectric conversion device (light detection unit) 228c. As the dispersive device 228a, a planar diffraction grating is employed, and by changing the angle of the dispersive device 228a, the center of the wavelength range of the fluorescence to be detected is selected. In Fig. 1, a driving unit for adjusting the angle of the dispersive device 228a is omitted. The second detection unit 231 comprises a photoelectric conversion device (light detection unit) 231a. The photometric filter 230 arranged at a stage earlier than the second detection unit 231 has a characteristic of only being transmissive for light having a particular wavelength. The photoelectric conversion devices 228c and 231a are for example a photomultiplier (PMT) which conducts photoelectric conversion of the incident light and outputs the detection signal in accordance with the amount of light. As the dispersive device 228a, a device other than the planar diffraction grating such as a concave diffraction grating for example can be employed.

Of the fluorescence which has been transmitted through the dichroic mirror 221, the light from a point shifted in an optical axis direction with respect to the position on which the light is focused (measuring point) is prevented from passing via the confocal pinhole 226. Thereby, only the fluorescence from the plane including the measuring point in an optical axis direction is incident on the mirror 227.

The above mirror 227 can be the one which totally reflects light or the one which has a selective transmittance so that the mirror 227 is only transmissive for light having a particular wavelength. Herein, it is assumed that the mirror 227 totally reflects light. In the case where a mirror 227 which totally reflects light is employed, the fluorescence which has been transmitted through the confocal pinhole 226 is incident on the second detection unit 231 via the mirror 229 and the photometric filter 230 when the mirror 227 is eliminated from the optical path.

The fluorescence which has been reflected by the mirror 227 is incident on the dispersive device 228a (a planar diffraction grating) of the first detection unit 228, and is reflected at different angles depending on the respective wavelengths, by the dispersive device 228a. As a result, when the first detection unit 228 is rotated around the axis which is orthogonal to both the incident light and the reflected light, the wavelength range of the fluorescence incident on the lens 228d is changed in accordance with its rotation angle. The fluorescence incident on the lens 228d is condensed on the slit 228b. The fluorescence which has passed through the slit 228b is incident on the photoelectric conversion device 228c, and an electrical signal in accordance with the intensity of the incident fluorescence is output. The electrical signal output from the photoelectric conversion device 228c is converted into digital data and is output to the PC 300. The digital data output to the PC 300 is the luminance data of each pixel which expresses an image of the sample SM. The CPU 302 in the PC 300 causes the display device 400 to display the image of the sample by generating image data by using the input digital data and by outputting the generated image data to the display device 400.

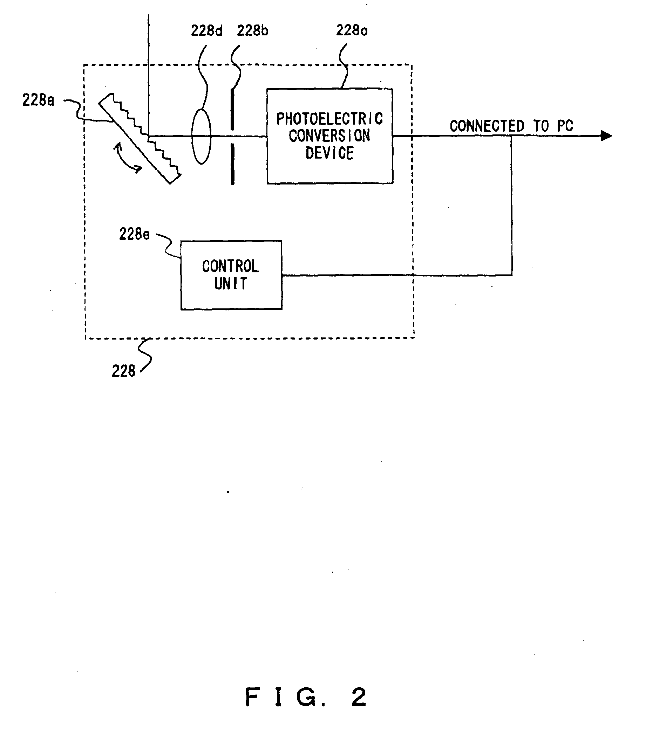

Fig 2 explains a configuration of the first detection unit 228. As shown in Fig. 2, the first detection unit 228 comprises a control unit 228e in addition to the components shown in Fig. 1.

The wavelength range (bandwidth) for the spectrometry and the center of the wavelength range are both specified by a user operating the input device 500. When the user specifies the wavelength range, the CPU 302 obtains the aperture width to be set in the slit 228b based on the specified wavelength range, and transmits the obtained value to the control unit 228e. Thereby, the control unit 228e drives a driving unit (not shown) for the slit 228b, and the CPU 302 changes the aperture width of the slit 228b to the specified width. When the user specifies the center of the wavelength range, the CPU 302 obtains the rotation angle of the dispersive device 228a such that the light having the specified center wavelength is incident on the center of the aperture of the slit 228b, and transmits the obtained angle to the control unit 228e. Thereby, the control unit 228e drives the driving unit (not shown) for the dispersive device 228a, and the CPU 302 changes the rotation angle of the control unit 228e to the specified rotation angle.

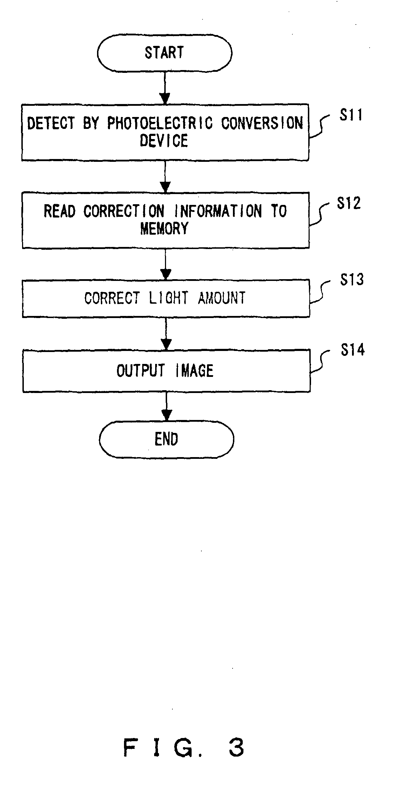

Fig. 3 is a flowchart of image display processes. The image display processes are executed in order to display an image acquired by two-dimensionally scanning the sample SM when a user provides a scan start instruction by operating the input device 500 for example. The processes are implemented by the CPU 302 in the PC 300 executing the program stored in the storage device 301 for example. Next, the display processes are explained in detail by referring to Fig. 3. At the time of starting the display processes, the dispersive device 228a and the slit 228b have respectively been adjusted to the states desired by the user.

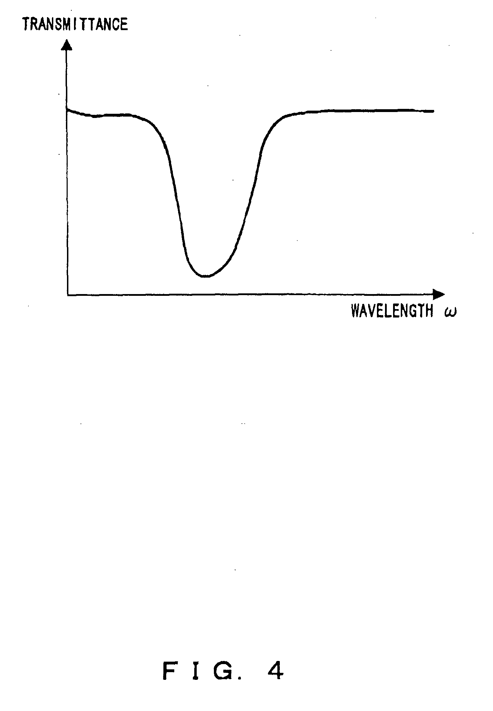

First, in a step S11, the scanning optical unit 223 (the control unit of which is not shown) starts scanning, and the photoelectric conversion device 228c starts detection of light. In a next step S12, the wavelength characteristic of the dichroic mirror 221 is read from the storage device 301 as correction information and is written to the memory 303. One example of a wavelength characteristic is shown in Fig. 4. Due to the wavelength characteristic shown in Fig. 4, the dichroic mirror 221 reflects not only light from the light source 100 but also a part of the fluorescence from the sample SM.

Additionally, in the case of an apparatus in which a plurality of types of dichroic mirrors 221 to be used, are switched, the wavelength characteristic data for each type is stored in the storage device 301. Also, a switching device for the dichroic mirrors 221 and the PC 300 are connected such that the PC 300 can recognize the information regarding the type of the dichroic mirror 221 which is currently in use. Then, the wavelength characteristic data corresponding to the dichroic mirror 221 currently employed is read as the correction information.

In a step S13 subsequent to the step S12, by the scanning optical unit 223 conducting a scan, light intensity signals which are output from the photoelectric conversion device 228c and converted into digital data are sequentially obtained. And correction taking the wavelength characteristic shown in Fig. 4 into account is conducted on the obtained light intensity signal, thereafter, the corrected light intensity signal is stored in the memory 303 as luminance information. Regarding the above correction, the signal value $\alpha\lambda'$ after the correction at the wavelength $\lambda$ is obtained by the equation below where the signal value of the obtained light intensity is $\alpha\lambda$ and the wavelength characteristic of the dichroic mirror 221 is $\beta\lambda$.

$$\alpha\lambda' = \alpha\lambda \; / \; (\beta\lambda \; / \; 100) \qquad (1)$$

The above calculation for acquiring the signal value $\alpha\lambda'$ in the equation (1) is executed for each $\Delta\lambda$ which is very narrow wavelength interval. Thereby, the light intensity signal from which the influence by the wavelength characteristic of the dichroic mirror 221 has been eliminated, in other words, the light intensity signal which should be obtained when the wavelength characteristic is constant over the entirety of the wavelength $\lambda$ is reproduced by a digital process. By such a reproduction as above, a more accurate light intensity signal can be obtained, which realizes more accurate spectrometry. The above reproduction can be realized by a conventional microscope apparatus (control device thereof) by changing the program executed by the PC (control device) 300.

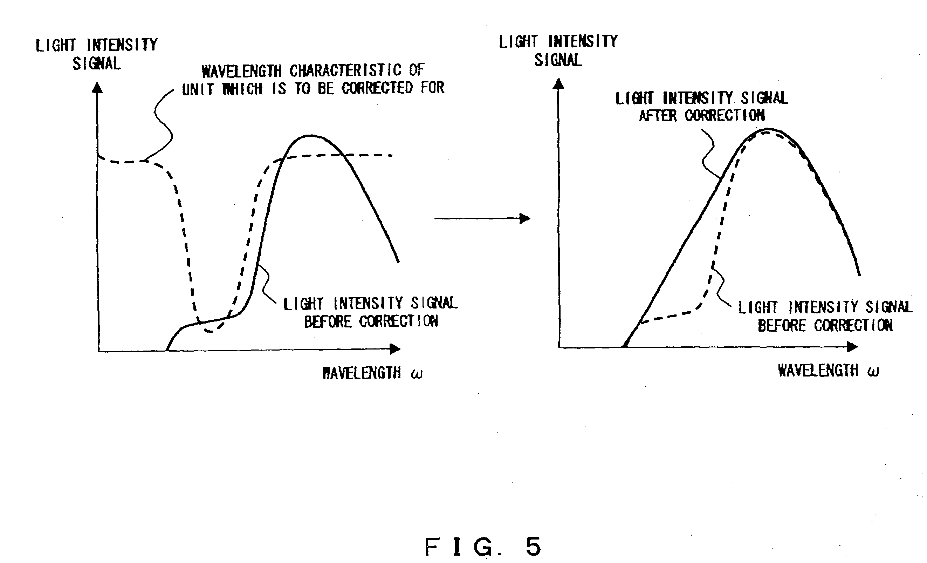

Fig. 5 explains corrections to the light intensity signals. As shown in Fig. 5, in the wavelength range where the signal value is smaller than the actual value due to the low penetration transmittance of the dichroic mirror 221, or in other words because the optical intensity is attenuated, the attenuation is corrected, and the signal value of the light intensity signal after the correction is larger than the original value.

The correction of the light intensity signal and storage of the corrected light intensity signal is conducted on all the light intensity signals from the photoelectric conversion device 228c. Thereby, when the scan is completed and the light intensity signal from the photoelectric conversion device 228c is no longer received, the process proceeds to a step S14, and an image of the sample is produced based on the luminance information stored in the memory 303, and the produced image is output to the display device 400, and displayed on it. Thereafter, a series of the processes is terminated.

Additionally, in the present embodiment, the correction is conducted on the light intensity signal output from the first detection unit 228, however, the correction can be conducted on the light intensity signal output from the second detection unit 231. In the case where the fluorescence from the sample SM is separately incident on the first detection unit 228 and the second detection unit 231, the mirror 227 has to be a dichroic mirror which has the wavelength characteristic of transmitting light having a particular wavelength. Therefore, in the second detection unit 231, in order to realize more accurate spectrometry, it is desirable that the corrections are also conducted in accordance with the wavelength characteristics of the mirror 227 and the photometric filter 230, in addition to the correction in accordance with the wavelength characteristic of the dichroic mirror 221 (Fig. 4). In the case when the mirror 227 is not a mirror which totally reflects but a dichroic mirror, it is desirable to conduct the correction taking the wavelength characteristics of the mirror 227 into consideration in the first detection unit 228 as well. The corrections in accordance with the characteristics of the mirror 227 and the photometric filter 230 can be conducted in a manner similar to that of the correction in accordance with the wavelength characteristic of the dichroic mirror 221, however, another method can be employed. The same applies to the correction in accordance with the wavelength characteristic of the dichroic mirror 221. In any of the above described corrections, the influence on the light incident on the photoelectric conversion device (light detection unit) of the characteristics of optical devices is eliminated, accordingly, the configuration of the optical system, i.e., the number, the arrangement and the like of the dichroic mirrors or the photometric filters is not limited, and various alternations are allowed without departing from the spirit of the present invention.

<Second Embodiment>

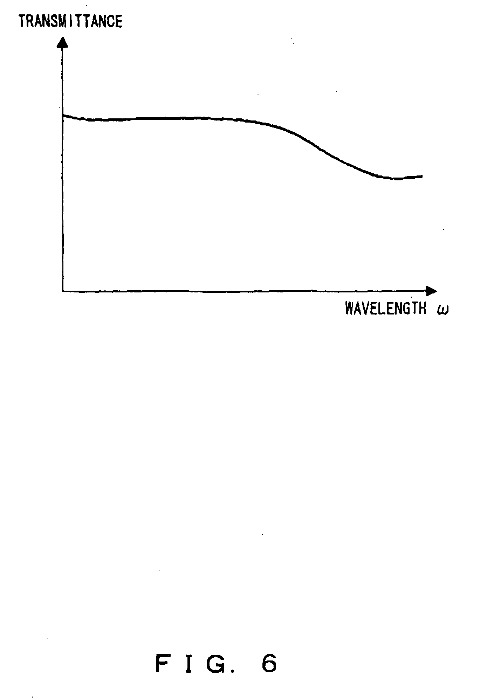

In the first embodiment, the influence on the light incident on the photoelectric conversion device of the characteristics of optical devices is eliminated. However, an efficiency of the detection of converting light into a light intensity signal of the photoelectric conversion device also varies depending on the wavelength, as shown by Fig. 6 for example. Thus, a second embodiment realizes more accurate spectrometry by conducting a correction in accordance with the wavelength characteristic of the photoelectric conversion device.

The configuration of the microscope apparatus according to the second embodiment is basically the same as the configuration according to the first embodiment. Accordingly, members which are the same or basically the same as those in the first embodiment are denoted by the same numerals, and only portions which are not the same as those in the first embodiment will be explained.

In the second embodiment, steps S12 and S13 in the image display processes of Fig. 3 are different from those of the first embodiment. Thus, only these steps S12 and S13 will be explained in detail.

In the second embodiment, in the step S12, the wavelength characteristic of the photoelectric conversion device 228c as shown in Fig. 6 is read from the storage device 301 and written to the memory 303 as correction information. In the subsequent step S13, by causing the scanning optical unit 223 to conduct a scan, light intensity signals which are output from the photoelectric conversion device 228c and converted into digital data, are sequentially obtained and correction taking the wavelength characteristic shown in Fig. 6 into account is conducted on the obtained light intensity signal, thereafter, the corrected light intensity signal is stored in the memory 303 as luminance information. The above correction can be conducted in the manner similar to that in the first embodiment for example.

Additionally, in the second embodiment, the influence on the light incident on the photoelectric conversion device of the characteristics of optical devices is not eliminated, however, the above influence may also be eliminated. Even when the influence of a characteristic of one optical device is eliminated, more accurate spectrometry can be realized.

<Third Embodiment>

The dispersive device 228a for spectrally resolving light also has a wavelength characteristic. In a third embodiment, the dispersive device 228a as an optical device whose characteristic influences the light incident on the optical conversion device is taken into consideration, and the correction is conducted corresponding to the amount of attenuation caused by the wavelength characteristic of the dispersive device 228a so that more accurate spectrometry is realized.

The configuration of the microscope apparatus according to the third embodiment is basically the same as the configuration according to the first embodiment. Accordingly, similarly to the second embodiment, members of which are the same or basically the same as those of the first embodiment are denoted by the same numerals, and portions which are not the same as those of the first embodiment will be explained.

In the third embodiment, steps S12 and S13 in the image display processes in Fig. 3 are different from those in the first embodiment. Thus, only these steps, S12 and S13 will be explained in detail.

In the third embodiment, in the step S12, the wavelength characteristic of the dispersive device 228a is read from the storage device 301 and written to the memory 303 as correction information. In the subsequent step S13, by causing the scanning optical unit 223 to conduct a scan, light intensity signals which are output from the photoelectric conversion device 228c and converted into digital data are sequentially obtained, and correction taking the wavelength characteristic of the dispersive device 228a into account is conducted on the obtained light intensity signal, thereafter, the corrected light intensity signal is stored in the memory 303 as luminance information. The above correction can be conducted in the manner similar to that of the first embodiment for example.

Additionally, in the third embodiment, the correction in accordance with other optical devices or the photoelectric conversion device 228c or the like whose characteristics influence the light incident on the optical conversion device is not conducted, however, the correction taking into account at least one of the above members can also be conducted. In that case, more accurate spectrometry is realized.

<Fourth Embodiment>

The higher the resolution for the spectrometry is, the narrower the aperture width of the slit 228b has to be. As the aperture width is made narrower, the amount of light which passes through the slit is reduced. A fourth embodiment always realizes accurate spectrometry by automatically responding to the change of measurement conditions (aperture width) as above.

The configuration of the microscope apparatus according to the fourth embodiment is basically the same as the configuration according to the first embodiment. Accordingly, similarly to the second and third embodiments, members which are the same or basically the same as those in the first embodiment are denoted by the same numerals, and portions which are not the same as those in the first embodiment will be explained.

When the aperture width of the slit 228b is made narrower and amount of light which passes through the slit is reduced, the S/N ratio of the light intensity signal output from the photoelectric conversion device 228c also deteriorates. It is very difficult to cope with deterioration of the S/N ratio by digital processes. Thus, in the fourth embodiment, scanning velocity which is set by the scanning optical unit 223 is adjusted so that a variation of the amount of the light incident on the photoelectric conversion device 228c caused by the change of the aperture width of the slit 228b is automatically avoided. By suppressing the variation of the amount of the detected light, the S/N ratio is improved, and accurate spectrometry can always be realized. The above change of the aperture width of the slit 228b is conducted by the CPU 302 transmitting to the control unit 228e the aperture width determined based on the wavelength range for detection (resolution) specified by the user.

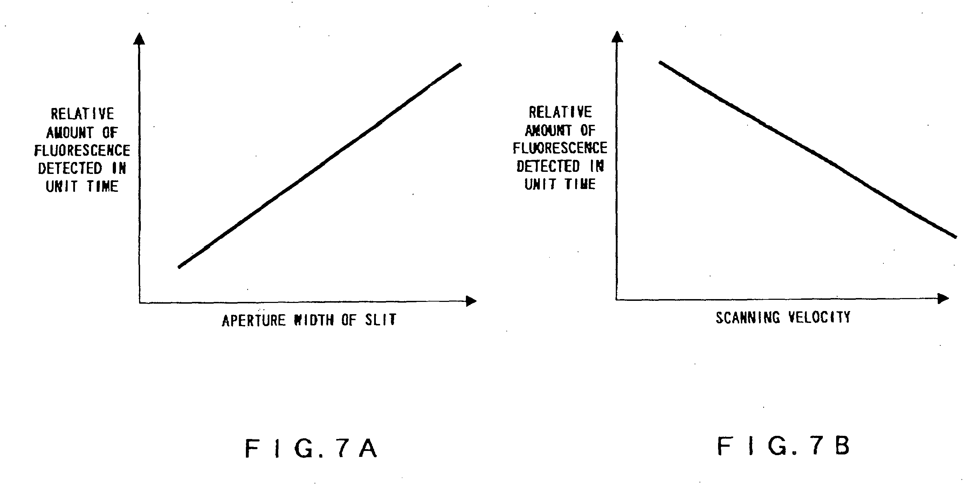

Fig. 7A explains the variation of the amount of the light incident on the photoelectric conversion device 228c in accordance with the aperture width of the slit 228b. Fig. 7B explains the variation of the amount of the light incident on the photoelectric conversion device 228c in accordance with the scanning velocity. As the light amount which expresses the variation, a relative fluorescence amount that expresses the relative light amount (fluorescence amount) detected per unit time i.e., the ratio of the fluorescence amount to the amount of the light incident with the aperture width of W_base as the aperture width reference value in Fig. 7A, and the ratio of the fluorescence amount to the amount of the light incident with the scanning velocity of V_base as the scanning velocity reference value in Fig. 7B, is employed.

As shown in Fig. 7A, the narrower the aperture width becomes, the smaller the amount of the light incident on the photoelectric conversion device 228c. Regarding the scanning velocity, as shown in Fig. 7B, the higher the scanning velocity is, the lower the amount of the light incident on the photoelectric conversion device 228c. Based on the above relationships, the scanning velocity V_new which is to be newly set is calculated in the equation below, where the aperture width which is to be newly set is W_new. In the equation, $\gamma$ is a constant determined by the slit 228b.

$$V\_new = \gamma \bullet (W\_new / W\_base) \bullet V\_base \qquad (2)$$

In addition to changing the aperture width of the slit 228b to the aperture width W_new, the scanning velocity is automatically changed to the scanning velocity V_new calculated by the equation (2) and the scanning optical unit 223 is caused to conduct the scan. Thereby, the variation of the amount of the light incident on the photoelectric conversion device 228c caused by the change of the aperture width of the slit 228b is avoided. By the above avoidance of the variation, the spectrometry is always conducted accurately.

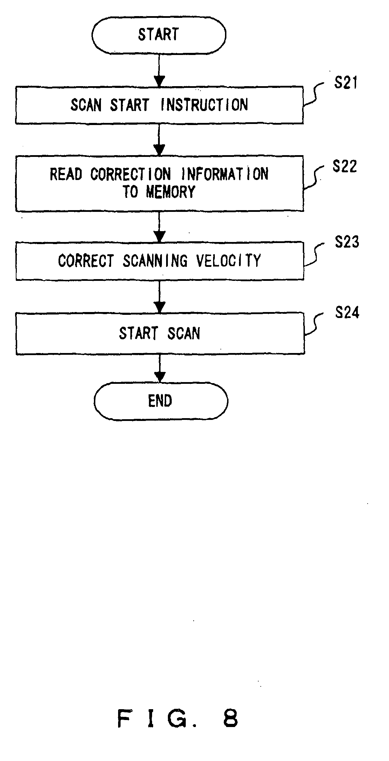

Fig. 8 is a flowchart of image acquisition processes. These processes are for responding to the scan start instruction input by the user by operating the input device 500 for example, and are realized by the CPU 302 in the PC 300 executing the program stored in the storage device 301 for example. Next, the image acquisition processes will be explained in detail by referring to Fig. 8.

First, in a step S21, the process waits until the user inputs the scan start instruction by operating the input device 500. The process in the step S22 also responds to specification of the resolution or the like made by operating the input device 500. The user is instructed to input the scan start instruction after specifying the measurement conditions such as the resolution and the like. Thus, when the scan start instruction is input, the process proceeds to the step S22.

In a step S22, the data necessary for calculating the scanning velocity V_new which is to be calculated by the equation (2) is read from the storage device 301 and is written to the memory 303 as the correction information. In a subsequent step S23, the scanning velocity V_new is calculated by the equation (2). In the next step S24, the scanning velocity of the scanning optical unit 223 is set in accordance with the calculated canning velocity V_new, and the scan starts. The light intensity signal which is output from the photoelectric conversion device 228c and converted into digital data after the start of the scan is sequentially obtained and stored in the memory 303 as the luminance information. When the scan is completed, the display device 400 is caused to display the image of the sample by using the luminance information stored in the memory 303 and a series of the processes is terminated.

Additionally, in the fourth embodiment, the scanning velocity is changed such that the variation of the amount of the light incident on the photoelectric conversion device 228c is avoided. However, the scanning velocity may be changed such that the variation of the light intensity signal output from the photoelectric conversion device 228c is avoided. Further, the fourth embodiment may be combined with one of the first to third embodiments. The combination can be realized by executing, in the step S24, the image display processes in Fig. 3.

<Fifth Embodiment>

In spectrometry, in the case where the sample SM is a sample prepared with multiple fluorescent stains, the wavelengths of the beam by which the sample SM is irradiated may be sequentially switched. In the case where the wavelengths of the beam are switched as above, the amount of light incident on the photoelectric conversion device 228c varies in accordance with the wavelength of the beam by which the sample SM is irradiated. The fifth embodiment automatically responds to the change of the measurement conditions as above and always realizes accurate spectrometry.

The configuration of the microscope apparatus according to the fifth embodiment is basically the same as the configuration according to the first embodiment. Accordingly, similarly to the second to fourth embodiments, members which are the same or basically the same as those in the first embodiment are denoted by the same numerals, and portions which are not the same as those of the first embodiment will be explained.

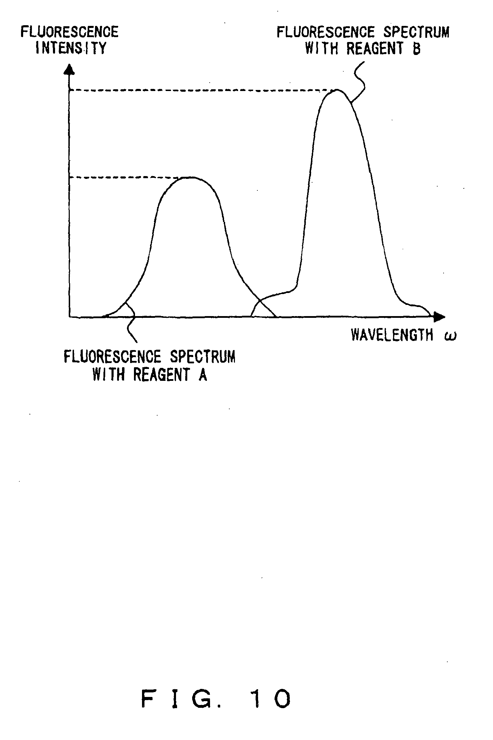

Fig. 10 explains a difference between the wavelength characteristics depending on reagent.

As shown in Fig. 10, wavelength characteristics of reagents used for staining the sample SM are not the same as one another, and reagents A and B have the wavelength characteristics respectively peculiar to one another. Accordingly, the wavelength of the beam by which the sample is irradiated for the excitation has to be switched in accordance with the target reagent. However, even when the wavelength of the beam is switched, the intensity (amount of light) of fluorescence varies in accordance with the reagent. Due to this variation, when the amount of the light incident on the photoelectric conversion device 228c is reduced, the S/N ratio of the light intensity signal deteriorates and accurate spectrometry can not be conducted. The fifth embodiment avoids the above situation by adjusting the scanning velocity, and always realizes accurate spectrometry. The wavelength characteristics shown in Fig. 10 are stored in the storage device 301.

In case that the user focuses attention to the fluorescence intensity at the peak of each reagent, the scanning velocity to be newly set can be calculated by selecting the reagent which serves as a reference among reagents, acquiring the ratio of the selected reference reagent to the fluorescence intensity for each reagent, and using the obtained ratio and the reference scanning velocity. Other methods of calculation can be employed for the above.

To select the wavelengths of the light by which the sample SM is irradiated, a sequential scanning method disclosed in Japanese Patent Application Publication 2002-287034 can be employed for example. In the fifth embodiment, as the light source 100, a light source that can emit a plurality of kinds of light (laser beams) having different wavelengths is employed, and as the dichroic mirror 221, the dichroic mirror that reflects the light emitted from the light source 100 and has the wavelength characteristic of transmitting the fluorescence from the sample SM is employed.

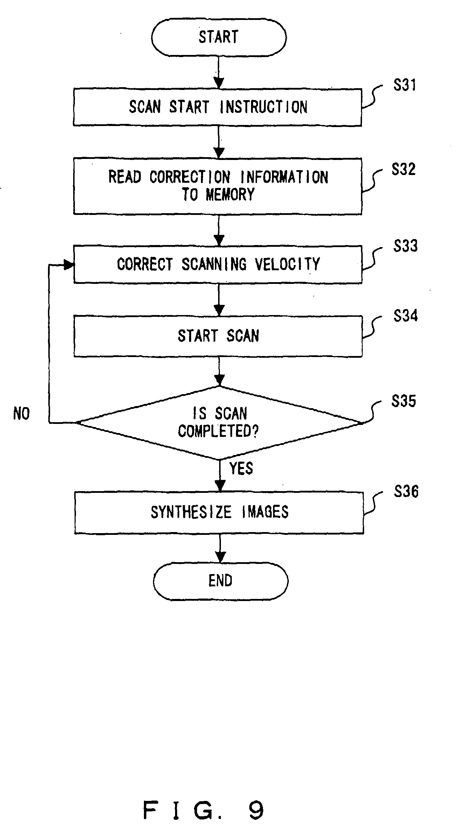

Fig. 9 is a flowchart of the image acquisition processes. Similarly to those in the fourth embodiment, these processes are the processes for responding to the scan start instruction input by the user by operating the input device 500 for example. Next, the image acquisition processes executed in the fifth embodiment will be explained in detail by referring to Fig. 9.

First in a step S31, the process waits until the user inputs the scan start instruction by operating the input device 500. The process in the step S32 also responds to selection of the sample SM (including the selection of whether or not the sample is to be the sample prepared with multiple stains or the like made by operating the input device 500. The user is instructed to input the scan start instruction after specifying all the measurement conditions that have to be specified. Thus, when the scan start instruction is input, the process proceeds to the step S32.

In a step S32, the wavelength characteristic as shown in Fig. 10 is read from the storage device 301 and written to the memory 303 as the correction information. In a subsequent step S33, the scanning velocity which is to be set is calculated in the manner described previously. In a step 534 to be executed next, the scanning velocity of the scanning optical unit 223 is set in accordance with the calculated scanning velocity, and after setting the wavelength of the beam to be emitted from the light source 100, the scan starts. The light intensity signal which is output from the photoelectric conversion device 228c and converted into digital data after the start of the scan is sequentially obtained and stored in the memory 303 as the luminance information. When the scan is completed, the process proceeds to a step S35.

In the step S35, it is determined whether or not the scan is completed. When a scan which has to be conducted at another wavelength remains, the determination result is NO, accordingly, the process returns to the step S33 and the scanning velocity in accordance with the wavelength of the light employed for the scan is calculated. Thereby, the luminance information is stored in the memory 303 for each wavelength of the beam by which the sample SM is irradiated. When, the scan which has to be conducted at another wavelength does not remain, the determination result is YES, accordingly, the process proceeds to a step S36, luminance information for each wavelength of the beam stored in the memory 303 is synthesized, a spectral image of the sample prepared with multiple stains SM is produced, and the display device 400 is caused to display the produced image, thereafter, a series of the processes is terminated.

Additionally, the fifth embodiment may be combined with one of the first to fourth embodiments. When the fifth embodiment is combined with one of the first to third embodiments, the light intensity signal is to be corrected in a step S34 for example. Further, various alterations are allowed without departing from the spirit of the present invention.

The respective embodiments which have been explained have the object of improving the accuracy of the spectrometry by executing the correction processes on the signals output from the light detection unit or by changing the scanning velocity in accordance with predetermined methods. The respective embodiments which will be explained hereinafter, obtains the same effects by adjusting the sensitivity of the light detection unit. A part of or all of these respective embodiments, can be suitably combined for the implementation.

<Sixth Embodiment>

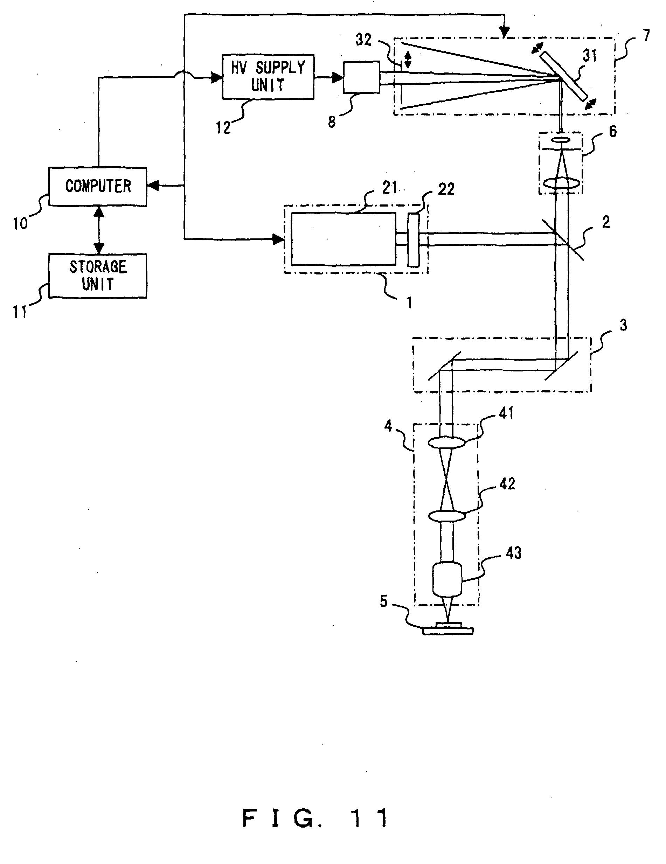

Fig. 11 shows a configuration of a microscope apparatus according to a sixth embodiment of the present invention.

This microscope apparatus is realized by applying the present invention to a laser scanning microscope apparatus. As shown in Fig. 11, this microscope apparatus comprises a laser light source 1 that can selectively irradiate a sample, a beam having one or a plurality of wavelengths, a wavelength selection unit 7 which can select fluorescence from the sample in an arbitrary wavelength range, a photomultiplier 8 which is a light detection unit for detecting light in a selected wavelength range, an HV supply unit 12 for supplying voltage to the photomultiplier 8, a computer (control device) 10 to which the laser light source 1, wavelength selection unit 7 and photomultiplier 8 are connected and which provides instructions necessary to the above components, and a storage unit 11 which can be accessed via the computer 10.

The laser light source 1 comprises a light source that simultaneously oscillates at a plurality of wavelengths such as a Multiline Ar laser 21 that simultaneously oscillates at three wavelengths of 458nm, 488nm and 514. 5nm for example and an AOTF (Acousto-Optic Tunable Filter) 22 which can conduct an irradiation control with respect to each oscillation wavelength. The turning on and off of the laser light source 1, a selection of laser wavelength to be emitted from the laser light source 1 and transmittance for each wavelength can be controlled by a user via the computer 10.

The wavelength selection unit 7 comprises a grating 31 for dispersing incident light into a spectrum, a slit 32 for blocking light of a wavelength which is not within the wavelength range to be detected of the spectrum. An angle of the grating 31 can be changed, and the slit 32 is only movable on the long wavelength side. Both of the grating 31 and the slit 32 can be controlled by a user via the computer 10 for example.

By operating the grating 31, the wavelength at the time of the start of detection of the light to be detected is set, and by operating the slit 32, the bandwidth of the light to be detected (wavelength range) is set. The wavelength at the time of the start of detection of light is the boundary on the short wavelength side of the wavelength range for the detection.

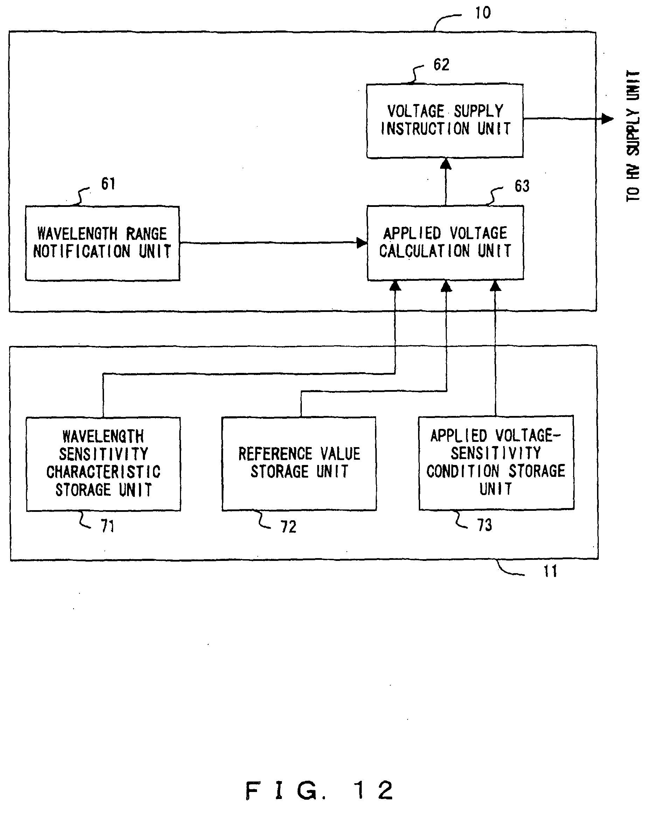

Fig. 12 is a block diagram for showing a more detailed configuration of the computer 10 and the storage unit 11 in Fig. 11.

As shown in Fig. 12, the storage unit 11 comprises a wavelength sensitivity characteristic storage unit 71, a reference value storage unit 72 and an applied voltage-sensitivity condition storage unit 73. The wavelength sensitivity characteristic storage unit 71 stores a wavelength characteristic of the photomultiplier 8. The reference value storage unit 72 stores a kind of fluorescent reagent, a value of applied voltage as a reference value upon measurement with the fluorescence reagent and a wavelength range employed upon determining the value of applied voltage as the reference value in an associated state thereof, regarding the fluorescence reagent applied to the sample. The applied voltage-sensitivity condition storage unit 73, stores conditions which have to be satisfied between the applied voltage and the sensitivity of the photomultiplier 8.

The computer 10 comprises a wavelength range notification unit 61, an applied voltage calculation unit 63 and a voltage supply instruction unit 62. The wavelength range notification unit 61 notifies an applied voltage calculation unit 63 of the wavelength range selected by the wavelength selection unit 7. The applied voltage calculation unit 63 calculates the value of a voltage applied for the wavelength range of which the applied voltage calculation unit 63 was notified based on the above wavelength range of which the applied voltage calculation unit 63 was notified, the value of the applied voltage as the reference value, the wavelength range employed upon determining the value of the applied voltage, the wavelength sensitivity characteristic of the photomultiplier and the applied voltage-sensitivity condition. The voltage supply instruction unit 62 provides the HV supply unit 12 in Fig. 11 an instruction to supply the applied voltage which has been calculated to the photomultiplier 8.

Operations of the above microscope apparatus will be explained by referring to Fig. 11 again.

The laser beam emitted from the laser light source 1 is reflected by a dichroic mirror 2, and is focused on a focal position adjusted to be in a sample 5 for example, passing through a optical deflection system (scanner) 3 and an optical irradiation system 4 comprising a pupil projection lens 41, an imaging lens 42 and an objective lens 43.

The reflected light or the fluorescence from the sample 5 again passes through the objective lens system 4 and the optical deflection system 3, is transmitted through the dichroic mirror, is incident on the photomultiplier 8 via a confocal optical system 6 and the wavelength selection unit 7, and is detected.

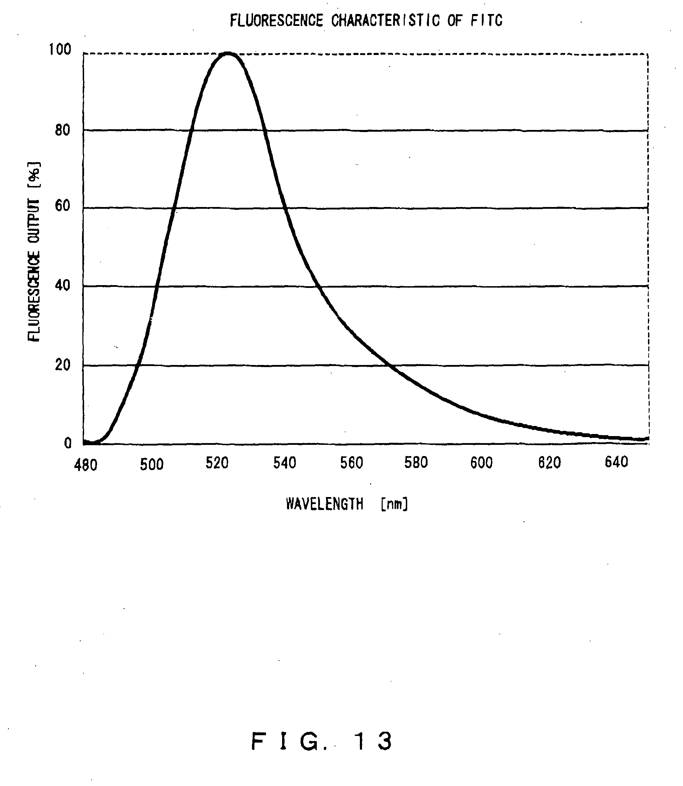

Fig. 13 shows an example of a wavelength characteristic of the fluorescence from the fluorescence reagent (FITC) applied to the sample.

This fluorescence reagent is excited by light having a wavelength of 488nm and has a fluorescence peak wavelength of 520nm as shown in Fig. 3.

Hereinafter, a setting process of a voltage applied to the photomultiplier according to the sixth embodiment will be explained. First, a user operates the laser light source 1 so that the sample is only irradiated by the light having the excitation wavelength of 488nm for the corresponding fluorescence reagent prior to starting measurement of the fluorescence profile of the fluorescence reagent (FITC).

Next, the user sets the width of the silt 32 to a value which is sufficiently low e.g., 1nm such that the wavelength sensitivity characteristic of the photomultiplier 8 in its detection wavelength range can be neglected.

Thereafter, the user sets the angle of the grating 31 such that the wavelength at the time of start of the detection is the fluorescence output peak wavelength of 520nm of the fluorescence reagent, and acquires a scanned image. Upon this, the user manually adjusts the voltage applied to the photomultiplier 8 so that the brightest image, without the luminance of the scanned image becoming saturated, is acquired.

When the optimum or generally optimum value for the applied voltage is fixed by this adjustment, the optimum or the generally optimum value is stored in the reference value storage unit 72 shown in Fig. 12 in accordance with the instruction by the user. Upon this, the above optimum or the generally optimum value is stored in a state associated with the kind of the corresponding fluorescence reagent and the wavelength range employed upon determining the optimum or generally optimum value. Additionally, the above optimum or generally optimum value is used as a reference value upon a measurement with the fluorescence reagent.

After the preparation as above, the user measures a fluorescence profile of the sample by using the laser scanning microscope. Specifically, the output from the photomultiplier 8 is measured while changing the angle of the grating 31 in order to change the wavelength at the time of start of detection in a range of 480nm to 650nm for example and having the slit 32 width in the wavelength selection unit 7 fixed.

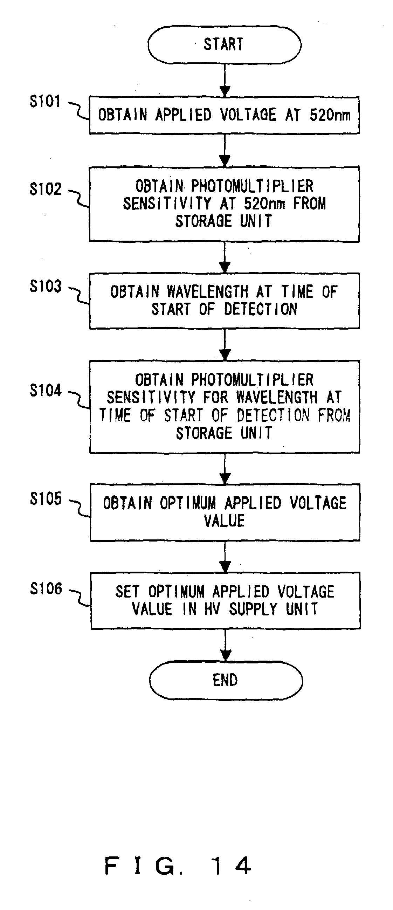

Each time the wavelength at the time of start of detection is changed by the wavelength selection unit 7, the applied voltage calculation unit 63 is notified of the changed wavelength at the time of start of detection (wavelength range) as the wavelength range in which spectrum data is to be currently obtained, via the wavelength range notification unit 61 shown in Fig. 12. The applied voltage calculation unit 63 which has been notified of this wavelength range (wavelength at the time of start of detection) calculates the voltage applied for the wavelength range of which the applied voltage calculation unit 63 was notified by executing processes described in the flowchart of Fig. 14.

Fig. 14 is a flowchart for showing processes of setting a voltage applied to the photomultiplier according to the sixth embodiment.

First, in a step S101, a value of applied voltage as a reference value upon measurement with the fluorescence reagent, and the wavelength range employed upon determining the value of the applied voltage are obtained from the reference value storage unit 72 in Fig. 12. For example, in the fluorescence reagent in Fig. 13, the wavelength range having 1nm width and including the fluorescence peak wavelength of 520nm corresponds to the above wavelength range employed upon determining the value of the applied voltage.

Next, in a step S102, the wavelength sensitivity characteristic of the photomultiplier 8 is obtained from the wavelength sensitivity characteristic storage unit 71 in Fig. 12. Then, based on this wavelength sensitivity characteristic and the wavelength range obtained in the step S101, the sensitivity which corresponds to the obtained wavelength range is obtained. Additionally, as described above, in the sixth embodiment, the width of the wavelength range obtained in one measurement is fixed to a value (Inm) which is sufficiently narrow that the wavelength sensitivity characteristic of the wavelength range can be neglected. And the value in the wavelength range, e.g., 520nm is caused to represent the wavelength range. The sensitivity for the above wavelength of 520nm is obtained based on the wavelength sensitivity characteristic of the photomultiplier 8 in order to deal with the obtained sensitivity as the sensitivity for the wavelength range obtained from the reference value storage unit 72.

In a step S103, the wavelength range (wavelength at the time of start of detection) of which the applied voltage calculation unit 63 was notified by the wavelength range notification unit 61 is obtained. In a step S104, the sensitivity of the photomultiplier 8 for the obtained wavelength at the time of start of detection is obtained from the wavelength sensitivity characteristic storage unit 71.

In a step S105, the value $V_s$ of the applied voltage as the reference value, the sensitivity $\alpha_s$ of the photomultiplier obtained based on the wavelength range corresponding to the applied value of as the reference value, the sensitivity $\alpha$ of the photomultiplier for the wavelength at the time of start of detection obtained in the above manner are substituted in the equation (3) below which expresses the relationship between the applied voltage and the sensitivity. Then, the value V of the voltage applied to the photomultiplier for the wavelength at the time of start of detection is calculated.

$$V = (\alpha_s / \alpha)^{1/kn} \times V_s \qquad\qquad (3)$$

where k is a constant in accordance with material properties of the photomultiplier, n is the number of stages of dynodes of the photomultiplier, and both of the constants are values fixed for each photomultiplier.

Thereafter, in a step S106, the value of the applied voltage V for the wavelength at the time of start of detection calculated in the step S105 is set in the HV supply unit 12 by the applied voltage calculation unit 63 shown in Fig. 12 via the voltage supply instruction unit 62.

As above, in the sixth embodiment, the value of the voltage applied to the photomultiplier is calculated in accordance with the wavelength range for the detection in order to flatten the wavelength sensitivity characteristic of the photomultiplier. Accordingly, output of a constant level, regardless of wavelength can be obtained when the photomultiplier receives light having the same intensity.

In the above explanation, the acquisition range (wavelength range) for one acquisition of spectrum data is sufficiently narrow and fixed. In the case where the acquisition range (wavelength range) of the spectrum data is not sufficiently narrow or a fixed length is not employed as the acquisition range (wavelength range), the sensitivity of the photomultiplier 8 is obtained from the wavelength sensitivity characteristic storage unit 71 and the value obtained by integrating the obtained sensitivity in the corresponding wavelength range is used as the sensitivity $\alpha$ in the above equation (3). Alternatively, for the center wavelength of each wavelength range, the sensitivity of the photomultiplier 8 is obtained from the wavelength sensitivity characteristic storage unit 71 and the obtained sensitivity is used as the sensitivity $\alpha$ in the above equation (3).

<Seventh Embodiment>

In a seventh embodiment which will be explained below, in order to keep brightness of a scanned image constant, for each wavelength in the acquisition range (wavelength range) of the spectrum data, the corresponding sensitivity of the photomultiplier (light detection unit) is multiplied by the wavelength intensity of the incident light and is integrated over the wavelength range. In other words, in the seventh embodiment, wavelength components of the incident light are estimated by using the fluorescence wavelength characteristic of the sample to be observed. Additionally, in order to keep the brightness of the scanned image constant, a configuration in which the integration is conducted over the corresponding wavelength range is indispensable regardless of whether or not the corresponding wavelength range is sufficiently narrow, or whether or not the corresponding wavelength range is of a fixed length.

Also, in the seventh embodiment, basically the configuration of Fig. 11 is employed.

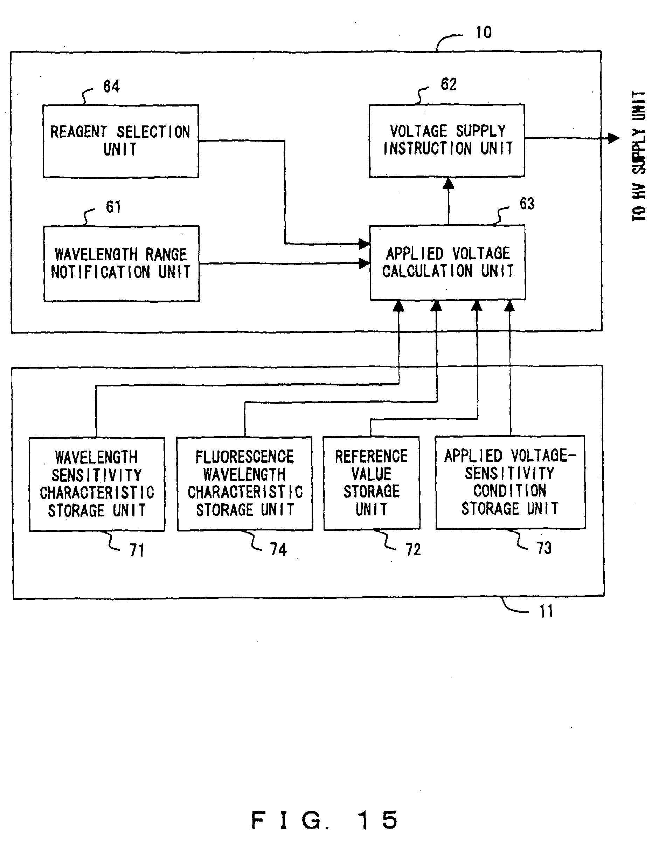

Fig. 15 is a block diagram for showing a more detailed configuration of the computer 10 and the storage unit 11 in Fig. 11 according to the seventh embodiment. Explanations of the components which are the same as those of Fig. 12 will be omitted.

In Fig. 15, the reference value storage unit 72 stores, regarding a plurality of fluorescence reagents, a kind of each fluorescence reagent, a value of an applied voltage as a reference value upon a measurement with each fluorescence reagent and the wavelength range employed upon determining the value of the applied voltage in an associated state thereof, which is not the same as that in the sixth embodiment. A fluorescence wavelength characteristic storage unit 74 stores the fluorescence wavelength characteristic data for each of the plurality of the fluorescence reagents.

First, a user selects a fluorescence reagent to be used for the observation among the plurality of the fluorescence reagents stored in the reference value storage unit 72 via a reagent selection unit 64, and the applied voltage calculation unit 63 is notified of the selection result.

Hereinafter, processes of setting voltages applied to the photomultiplier in the seventh embodiment will be explained. As explained above, the fluorescence reagent with which measurement is to be conducted currently is selected by the user among the plurality of the fluorescence reagents via the reagent selection unit 64. The user operates the laser light source 1 so that the sample is only irradiated by a beam having the excitation wavelength of the selected fluorescence reagent, e.g., 488nm, prior to starting the measurement of the fluorescence profile of the above selected fluorescence reagent (for example, FITC).

Next, the user adjusts the grating 31 and the slit 32 so that the wavelength range for detection is from 500nm to 520nm, via the computer 10.

Thereafter, while acquiring the scanned image in this wavelength range, the user manually adjusts the voltage applied to the photomultiplier 8 so that the brightest image without the luminance of the scanned image becoming saturated is acquired.

When the optimum or generally optimum value for the applied voltage is fixed by this adjustment, the optimum or the generally optimum value is stored in the reference value storage unit 72 shown in Fig. 15 in a state associated with the kind of the corresponding fluorescence reagent and the wavelength range employed upon determining the optimum or generally optimum value in accordance with the instruction of the user. Additionally, the above optimum or generally optimum value is used as a reference value upon a measurement employing the fluorescence reagent.

After the preparation as above, the user measures the fluorescence profile of the sample by using the laser scanning microscope.

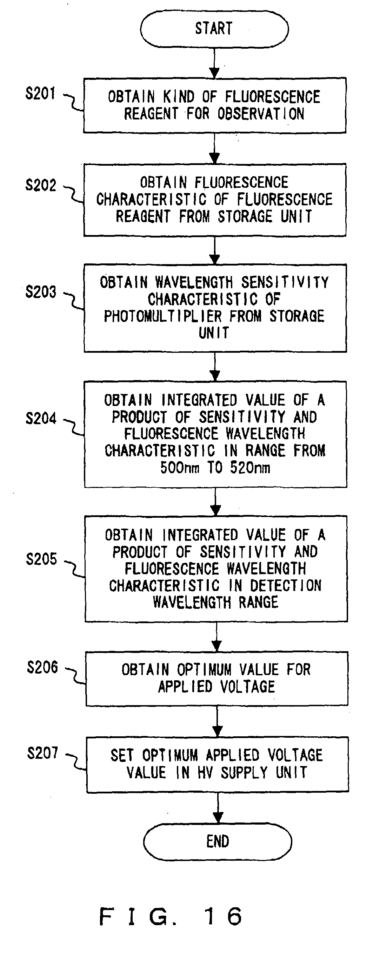

In the seventh embodiment, after the above, the user changes the wavelength range. This change of the wavelength range is made via the wavelength selection unit 7. Each time the wavelength range is changed by the wavelength selection unit 7, the applied voltage calculation unit 63 is notified of the changed wavelength range via the wavelength range notification unit 61 shown in Fig. 15 as the wavelength range in which spectrum data is to be currently obtained. The applied voltage calculation unit 63 which has been notified of this wavelength range calculates the voltage to be applied for the wavelength range of which the applied voltage calculation unit 63 was notified by executing processes described in a flowchart in Fig. 16.

Fig. 16 is a flowchart for showing processes of setting the voltage to be applied to the photomultiplier according to the seventh embodiment.

First, in a step S201, a kind of the fluorescence reagent (information about the kind of the fluorescence reagent) for the observation is notified and obtained via the reagent selection unit 64. Then, in a step S202, the fluorescence wavelength characteristic of the fluorescence reagent for the observation is obtained from the fluorescence wavelength characteristic storage unit 74. Additionally, the processes in the steps S201 and S202 can be executed at the time the user sets the reagent or can be executed each time the applied voltage is calculated (as shown in a flowchart in Fig. 16 for example).

In a subsequent step S203, the value of the applied voltage as the reference value upon the measurement which corresponds to the kind of the fluorescence for the current observation among the plurality of the fluorescence reagents and the wavelength range (500nm to 520nm) used upon determining the value of the applied voltage are obtained from the reference value storage unit 72 in Fig. 15. The wavelength sensitivity characteristic of the photomultiplier 8 is obtained from the wavelength sensitivity characteristic storage unit 71 in Fig. 15.

Then, in a step S204, based on this wavelength sensitivity characteristic and the wavelength range obtained from the reference value storage unit 72, the sensitivity corresponding to the obtained wavelength range is obtained. In other words, for each wavelength in the wavelength range, the product of the sensitivity of the photomultiplier obtained from the wavelength sensitivity characteristic and the fluorescence wavelength characteristic of the selected fluorescence reagent is integrated over the wavelength range, and is calculated as the sensitivity for the obtained wavelength range.

In a subsequent step S205, for the current wavelength range of which the applied voltage calculation unit 63 was notified via the wavelength range notification unit 61 in Fig. 15, the sensitivity corresponding to the above wavelength range is obtained based on the above wavelength sensitivity characteristic and the wavelength range of which the applied voltage calculation unit 63 was notified. In other words, for each wavelength in the wavelength range of which the applied voltage calculation unit 63 was notified, the product of the sensitivity obtained from the wavelength sensitivity characteristic of the photomultiplier and the fluorescence wavelength characteristic of the selected fluorescence reagent is integrated in the corresponding wavelength range, in order to calculate the sensitivity for the current wavelength range of which the applied voltage calculation unit 63 has been notified.

Then, in a step S206, by substituting the value $V_s$ of the applied voltage as the reference value, the sensitivity $\alpha_s$ of the photomultiplier as an integrated value for the wavelength range corresponding to the applied voltage as the reference value, the sensitivity $\alpha$ of the photomultiplier as the integrated value for the current wavelength range obtained in the above manner in the above equation (3), the value V of the voltage applied to the photomultiplier for the current wavelength range is calculated.

Then, in a step S207, the value V of the applied voltage for the current wavelength range which is calculated in the step S206 is set in the HV supply unit 12 by the applied voltage calculation unit 63 via the voltage supply instruction unit 62 in Fig. 15.

As above, in the seventh embodiment, in the case where the wavelength range is changed for each measurement (the case where the starting position only is changed with the fixed width, the case where both of the width and the starting position are changed, or the like) the value of the voltage applied to the photomultiplier is calculated taking the wavelength sensitivity characteristic of the photomultiplier and the wavelength characteristic of the detected fluorescence into account in order to keep the brightness of a scanned image constant, accordingly, outputs of a constant level regardless of the wavelength range over which the detection is conducted can be obtained.

Additionally, as the value of the applied voltage (set sensitivity), the set sensitivity other than that of the above sixth or seventh embodiments can also be employed. For example, wavelength components of incident light vary in accordance with not only the kind of the reagent used for the observation, but also the characteristic of a filter in an optical path. In this case, the set sensitivity can be obtained by multiplying the wavelength sensitivity characteristic of the photomultiplier by the transmittance characteristic of the filter. In such a way, variation of the wavelength characteristic of the filter can be corrected.

Additionally, intensity of incident light varies in accordance with the intensity of a laser beam by which the sample is irradiated. In this case, brightness of the scanned image can be kept constant by a configuration in which outputs from a laser device are monitored, and when the output increases, an applied voltage is increased and when the output decreases, the applied voltage is decreased.

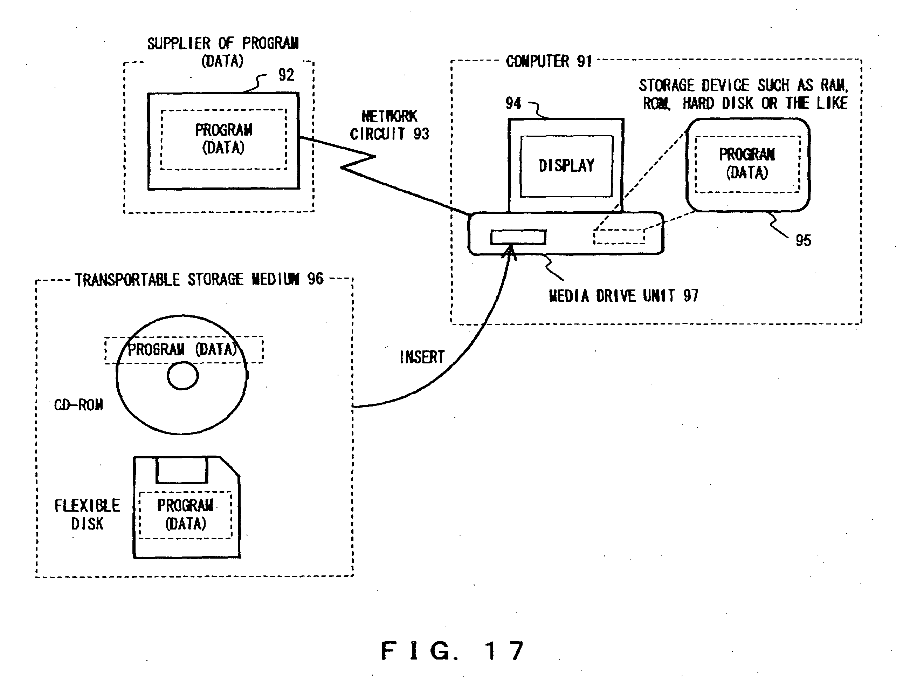

Fig. 17 shows an example of a storage medium storing the program for causing the computer to execute the operations for realizing the present embodiment.

As shown in Fig. 17, as the above storage medium, a transportable storage medium 96 such as an optical disk, a magneto-optical disk, a flexible disk or the like which is detachable with a media drive unit 97, a storage device 92 that can be accessed by an external apparatus (server or the like) capable of transmitting a program via a network circuit 93 can be employed besides memory 95 (RAM, a hard disk, and the like) in a body 94 of a computer 91. The program for realizing any of the embodiments of the present invention (first to seventh embodiments) can be loaded into the memory 95 in the body 94 from the above storage media and can be executed.

Hereinabove, the embodiments of the present invention have been explained.

The characteristic of the transmissive filter by which the light incident on the light detection unit was transmitted, the characteristic of the light detection unit upon conversion of the light into the light intensity signal and the like have influence on the light intensity signal output from the light detection unit as well. According to the present invention, such characteristics as above can also be taken into consideration in order to realize more accurate spectrometry.

Upon conducting the spectrometry at a higher resolution, the aperture width of the adjustable aperture device decreases, thereby, the amount of light incident on the light detection unit is reduced. As the amount of light is reduced, the S/N ratio deteriorates so that accuracy of spectrometry also deteriorates. Also, the intensity of the light intensity signal output from the light detection unit varies depending on the wavelength of the light by which the sample is irradiated, accordingly, the amount of light varies in the case of sequentially switching the wavelength of the light by which the sample is irradiated. According to the present invention, the variation of the amount of light incident on the light detection unit caused by the change of the measurement conditions such as the change of the wavelength resolution or the switch of the wavelength of the light by which the sample is irradiated upon conducting the spectrometry can be responded to in order to conduct more accurate spectrometry.

As above, according to the present invention, more accurate spectrometry can be realized. Also, accurate spectrometry can be conducted by responding to the changes of the measurement conditions.

Further, even in the case when the scanned image of the sample is acquired by using the one and the same photomultiplier, the intensity of the fluorescence incident on the photomultipliers and the wavelength components change when the scanning conditions such as the laser beam used, the sample as the target to be observed, the wavelength range for the detection and the like are changed such that the outputs (signals) from the photomultipliers change.

Especially, in a spectroscopy microscope apparatus capable of acquiring scanned images while successively changing a wavelength of the light to be detected, the luminance level corresponding to each wavelength varies being influenced by the sensitivity characteristic of the photomultiplier upon the acquisition of the scanned images. This requires re-adjustments of the voltage to be applied when it is desired that measurement be conducted at a constant luminance level or when it is desired that optimum brightness of images be secured. The re-adjustment such as the above is a burden on a user, which is problematic.

Further, because measurement has to be interrupted for the adjustment, there is a problem that measurement takes a long time in the case where the measurement is to be conducted while the conditions are changed many times. Also, there is a problem that there is a possibility that a fluorochrome of a sample fades before an observation is completed because the sample has to be irradiated for a continued period by a laser beam while scanned images are observed during the adjustment.

According to the present invention, even when the scanning conditions are changed, it is possible to adjust the voltage (sensitivity) applied to the light detection unit (photomultiplier or the like) automatically or almost automatically. Accordingly, the user does not have to adjust the voltage applied to the light detection unit each time the scanning conditions are changed, so that the burden on the user is reduced. Additionally, measurement in a shorter time is realized so that the fading of the sample is reduced.

**Claims**

1. A microscope apparatus, comprising:

    a light source (100, 1);
    an optical system for condensing a beam emitted by the light source onto a sample (SM, 5), for irradiating the sample by the beam and for causing light from the sample obtained by the irradiation to be incident on a light detection unit (228c, 8), including

        1) a wavelength selective optical device (221, 2) having different transmittances depending on wavelengths, for transmitting only light having a wavelength in a specified wavelength range of the light from the sample,
        2) a dispersive unit (228a, 31) for spectrally resolving light from the sample, and
        3) a wavelength range selection unit (228a, 228b, 228d, 31, 32) for selecting light having a wavelength in a prescribed wavelength range of the light resolved spectrally by the dispersive unit; and

    a correction unit (301-3, 62, 63) for adjusting a light intensity signal output from the light detection unit based on at least one of wavelength characteristics of the wavelength selective optical device and the light detection unit respectively.

2. The microscope apparatus according to claim 1, wherein:

    the correction unit is a light intensity signal adjustment unit for executing a correction process on a light intensity signal output from the light detection unit based on at least one of wavelength characteristics of the wavelength selective optical device and the light detection unit respectively.

3. The microscope apparatus according to claim 2, wherein:

    the light intensity signal adjustment unit adjusts a light intensity signal, by a digital process, for correcting at least one of a variation in a spectral component of light incident on the light detection unit caused by a wavelength characteristic of the wavelength selective optical device and an error in the light intensity signal caused by a wavelength characteristic of a detection sensitivity in the light detection unit.

**4.** The microscope apparatus according to claim 1, wherein:

the optical system comprises a scan unit (223, 3) for relatively moving a condensed beam in a direction crossing an optical axis over the sample, and further comprises a scan adjustment unit (301-3) for adjusting a scanning velocity of the scan unit based on at least one of setting information of the wavelength range selection unit and intensity information of light obtained from the sample.

**5.** The microscope apparatus according to claim 4, wherein:

the setting information of the wavelength range selection unit is a width of a wavelength range of light selected by the wavelength range selection unit.

**6.** The microscope apparatus according to claim 4, wherein:

the scan adjustment unit adjusts the scanning velocity based on the intensity information of the light in response to a switch of wavelength of the beam emitted from the light source and condensed onto the sample.

**7.** The microscope apparatus according to claim 6, wherein:

the sample is a sample prepared with multiple stains, and intensity information of light obtained from the sample is wavelength characteristic information of respective fluorochromes applied to the sample.

**8.** The microscope apparatus according to claim 1, further comprising:

a sensitivity adjustment unit (12) for adjusting detection sensitivity of the light detection unit (8); and
a storage unit (11, 71) for storing wavelength sensitivity characteristic data of the light detection unit, wherein:

the correction unit (62, 63) is a sensitivity setting unit for setting, in the sensitivity adjustment unit, detection sensitivity which flattens a wavelength sensitivity characteristic of the light detection unit based on the wavelength sensitivity characteristic data of the light detection unit in the wavelength range selected by the wavelength range selection unit.

**9.** The microscope apparatus according to claim 8, wherein:

the sensitivity setting unit (62, 63) calculates a sensitivity for a wavelength range selected by the wavelength range selection unit (31, 32) based on a value of a wavelength included in the wavelength range selected by the wavelength range selection unit and the wavelength sensitivity characteristic data of the light detection unit (8), and sets the value obtained based on the calculated sensitivity in the sensitivity adjustment unit (12) as a detection sensitivity.

**10.** The microscope apparatus according to claim 8, wherein:

the sensitivity setting unit calculates sensitivity for a wavelength range selected by the wavelength range selection unit by integrating a product of the sensitivity obtained from the wavelength sensitivity characteristic data of the light detection unit and fluorescence output, and sets a value obtained based on the calculated sensitivity in the sensitivity adjustment unit as detection sensitivity, for each wavelength included in the wavelength range selected by the wavelength range selection unit.

**11.** The microscope apparatus according to claim 8, wherein:

the sensitivity setting unit sets, in the sensitivity adjustment unit, a detection sensitivity which flattens a wavelength sensitivity characteristic of the light detection unit by comparing a sensitivity for the wavelength range selected by the wavelength range selection unit with a reference sensitivity.

**12.** The microscope apparatus according to claim 8, wherein:

the sensitivity setting unit sets, in the sensitivity adjustment unit, a detection sensitivity which flattens a wavelength sensitivity characteristic of the light detection unit by comparing a sensitivity for the wavelength range selected by the wavelength range selection unit with a reference sensitivity corresponding to a fluorescence reagent employed to detect fluorescence.

**13.** The microscope apparatus according to claim 8, wherein:

the sensitivity setting unit sets, in the sensitivity adjustment unit, a detection sensitivity by using two datum of a wavelength sensitivity characteristic of the light detection unit and a fluorescence wavelength characteristic of the fluorescence to be detected such that a signal output from the light detection unit is constant regardless of wavelength, and such that a product of a wavelength sensitivity characteristic and a fluorescence wavelength characteristic is constant for each wavelength range of light to be detected.

**14.** The microscope apparatus according to claim 8, wherein:

the sensitivity setting unit calculates a sensitivity for a wavelength range selected by the wavelength range selection unit by integrating a product of the sensitivity obtained from the wavelength sensitivity characteristic data of the light detection unit and a sensitivity obtained from a fluorescence wavelength characteristic data of the fluorescence to be detected in the wavelength range, and sets a value obtained based on the calculated sensitivity in the sensitivity adjustment unit as a detection sensitivity, for each wavelength included in the wavelength range selected by the wavelength range selection unit.

**15.** The microscope apparatus according to claim 1, further comprising:

a sensitivity adjustment unit (12) for adjusting a detection sensitivity of the light detection unit (8) ;
a storage unit (11, 71, 74) for storing a wavelength characteristic data of the light detection unit and a wavelength intensity characteristic data for each kind of fluorescence; and
a kind setting unit (64) for setting a kind of fluorescence to be detected, wherein:

the correction unit (62, 63) is a sensitivity setting unit for setting, in the sensitivity adjustment unit, a detection sensitivity based on the wavelength sensitivity characteristic data of the light detection unit in the wavelength range selected by the wavelength range selection unit and the wavelength intensity characteristic data in the wavelength range of the set kind of fluorescence, such that the product of the sensitivity of the light detection unit and the fluorescence intensity over the wavelength range is constant.

**16.** A control device (300, 10) for a body of a microscope apparatus (200) including a wavelength selective optical device having different transmittances depending on wavelength, which only transmits light having a wavelength in a specified wavelength range of the light from the sample, a dispersive unit for spectrally resolving the light from the sample and a wavelength range selection unit for selecting light having a wavelength in a prescribed wavelength range of the light resolved spectrally by the dispersive unit, in an optical system for focusing a beam emitted from a light source onto a sample and irradiating the sample by the beam, and for causing light emitted from the sample obtained by the irradiation to be incident on a light detection unit, comprising:

a signal acquisition unit for acquiring a light intensity signal output from the light detection unit as digital data; and
a light intensity signal adjustment unit (301-3, 62, 63) for adjusting the light intensity signal obtained by the signal acquisition unit, based on at least one of a wavelength characteristic of the wavelength selective optical device and the light detection unit respectively.

**17.** A control device (300) for a body of a microscope apparatus (200) including a scan unit (223) for relatively moving a condensed beam for scanning a sample in a direction orthogonal to an optical axis, a dispersive unit for spectrally resolving light from the sample and a wavelength range selection unit for selecting light having a wavelength in a prescribed wavelength range of the light resolved spectrally by the dispersive unit, in an optical system for condensing a beam emitted from a light source on the sample and irradiating the sample by the beam, and for causing light emitted from the sample obtained by the irradiation to be incident on a light detection unit, comprising:

a velocity determination unit (3001-3) for determining a scanning velocity at which the scan unit moves the condensed beam, based on at least one of the characteristic of the wavelength range selection unit and information of light obtained from the sample; and
a scan control unit (301-3) for causing the scan unit to conduct a scan at the scanning velocity determined by the velocity determination unit.

**18.** A storage medium (96) which can be accessed by a computer (91) used as a control device (300, 10) for a microscope apparatus including a wavelength selection unit which only transmits light having a wavelength in a specified wavelength range among light from a sample, a dispersive unit for spectrally resolving light from the sample and a wavelength range selection unit for selecting light having a wavelength in a prescribed wavelength range of the light resolved spectrally by the dispersive unit, in an optical system for condensing a beam emitted from a light source on the sample and irradiating the sample by the beam, and for causing light emitted from the sample obtained by the irradiation to be incident on a light detection unit, and which stores a program for causing the computer to implement:

a function of acquiring a light intensity signal output from the light detection unit as digital data; and
a function of adjusting the light intensity signal obtained by the function of acquiring the light intensity signal, based on at least one of wavelength characteristics of the wavelength selection unit and the light detection unit respectively.

**19.** A storage medium (96) which can be accessed by a computer (91) used as a control device (300) for a body of a microscope apparatus including a scan unit for relatively moving a condensed beam for scanning a sample in a direction orthogonal to an optical axis, a dispersive unit for spectrally resolving light from the sample and a wavelength range selection unit for selecting light in a prescribed wavelength range among the light resolved spectrally by the dispersive unit, in an optical system for condensing a beam emitted from a light source on the sample and irradiating the sample by the beam, and for causing light emitted from the sample obtained by the irradiation to be incident on a light detection unit, and which stores a program for causing the computer to implement:

a function of determining a velocity at which the scan unit moves the condensed beam, based on at least one of the characteristic of the wavelength range selection unit and information of light obtained from the sample; and
a function of causing the scan unit to conduct a scan at the velocity determined by the function of determining velocity.

**20.** A storage medium (96) which can be accessed by a computer (91) used as a control device (10) for a microscope apparatus which includes a laser light source, an optical irradiation system for irradiating a sample by a laser beam from the laser light source, a wavelength selection unit that can select light emitted from the sample in an arbitrary wavelength range, a light detection unit for detecting the light having a wavelength in the wavelength range selected by the wavelength selection unit, and a sensitivity adjustment unit for adjusting detection sensitivity of the light detection unit, and which stores a program for causing the computer to implement:

a step of acquiring wavelength sensitivity characteristic data of the light detection unit in the wavelength range selected by the wavelength selection unit from a storage unit of the computer; and
a step of setting a detection sensitivity which flattens the wavelength sensitivity characteristic of the light detection unit in the sensitivity adjustment unit based on the obtained wavelength sensitivity characteristic data of the light detection unit.

**21.** A storage medium (96) which can be accessed by a computer (91) used as a control device (10) for a microscope apparatus which includes a laser light source, an optical irradiation system for irradiating a sample by a laser beam from the laser light source, a wavelength selection unit that can select light emitted from the sample in an arbitrary wavelength range, a light detection unit for detecting the light having a wavelength in the wavelength range selected by the wavelength selection unit, and a sensitivity adjustment unit for adjusting a detection sensitivity of the light detection unit, and which stores a program for causing the computer to implement:

a step of acquiring the wavelength sensitivity characteristic data of the light detection unit in the wavelength range selected by the wavelength selection unit and fluorescence wavelength characteristic data corresponding to a set kind of fluorescence from a storage unit in the computer; and
a step of setting the detection sensitivity in the sensitivity adjustment unit so that the product of the sensitivity of the light detection unit in the wavelength range selected by the wavelength selection unit and fluorescence intensity in the wave length range is constant based on the wavelength sensitivity characteristic data of the light detection unit in the wavelength range and the fluorescence wavelength characteristic data in the wavelength range of the set kind of the fluorescence.

**22.** A sensitivity setting method for a microscope apparatus which causes a control device (10) for a microscope apparatus which includes a laser light source, an optical irradiation system for irradiating a sample by a laser beam from the laser light source, a wavelength selection unit that can select light emitted from the sample in an arbitrary wavelength range, a light detection unit for detecting the light having a wavelength in the wavelength range selected by the wavelength selection unit, and a sensitivity adjustment unit for adjusting the detection sensitivity of the light detection unit to set the detection sensitivity of the light detection unit in the sensitivity adjustment unit, comprising:

> a step of acquiring wavelength sensitivity characteristic data of the light detection unit in the wavelength range selected by the wavelength selection unit from a storage unit (11) of the control device; and
> a step of setting a detection sensitivity which flattens the wavelength sensitivity characteristic of the light detection unit in the sensitivity adjustment unit based on the obtained wavelength sensitivity characteristic data of the light detection unit.

23. A sensitivity setting method for a microscope apparatus which causes a control device (10) for a microscope apparatus which includes a laser light source, an optical irradiation system for irradiating a sample by a laser beam from the laser light source, a wavelength selection unit that can select light emitted from the sample in an arbitrary wavelength range, a light detection unit for detecting the light having a wavelength in the wavelength range selected by the wavelength selection unit, and a sensitivity adjustment unit for adjusting detection sensitivity of the light detection unit to set the detection sensitivity of the light detection unit in the sensitivity adjustment unit, comprising:

> a step of acquiring the wavelength sensitivity characteristic data of the light detection unit in the wavelength range selected by the wavelength selection unit and wavelength intensity characteristic data corresponding to a set kind of fluorescence from a storage unit (11) of the control device; and
> a step of setting detection sensitivity in the sensitivity adjustment unit so that product of sensitivity of the light detection unit in the wavelength range and fluorescence intensity is constant based on the wavelength sensitivity characteristic data of the light detection unit in the wavelength range selected by the wavelength selection unit and wavelength intensity characteristic data in the wavelength range of the set kind of the fluorescence.

FIG. 1

FIG. 2

START

DETECT BY PHOTOELECTRIC CONVERSION DEVICE — S11

READ CORRECTION INFORMATION TO MEMORY — S12

CORRECT LIGHT AMOUNT — S13

OUTPUT IMAGE — S14

END

F I G. 3

TRANSMITTANCE

WAVELENGTH $\omega$

F I G. 4

LIGHT INTENSITY
SIGNAL

WAVELENGTH CHARACTERISTIC OF
UNIT WHICH IS TO BE CORRECTED FOR

LIGHT INTENSITY SIGNAL
BEFORE CORRECTION

WAVELENGTH ω

LIGHT INTENSITY
SIGNAL

LIGHT INTENSITY SIGNAL
AFTER CORRECTION

LIGHT INTENSITY SIGNAL
BEFORE CORRECTION

WAVELENGTH ω

F I G. 5

EP 1 669 740 A1

TRANSMITTANCE

WAVELENGTH ω

F I G. 6

FIG. 7A

FIG. 7B

START

SCAN START INSTRUCTION ⟩ S21

READ CORRECTION INFORMATION
TO MEMORY ⟩ S22

CORRECT SCANNING VELOCITY ⟩ S23

START SCAN ⟩ S24

END

F I G. 8

START

SCAN START INSTRUCTION — S31

READ CORRECTION INFORMATION TO MEMORY — S32

CORRECT SCANNING VELOCITY — S33

START SCAN — S34

IS SCAN COMPLETED? — S35

NO

YES

SYNTHESIZE IMAGES — S36

END

F I G.  9

FLUORESCENCE
INTENSITY

FLUORESCENCE SPECTRUM
WITH REAGENT B

WAVELENGTH $\omega$

FLUORESCENCE SPECTRUM
WITH REAGENT A

F I G. 1 0

F I G. 1 1

10

62

VOLTAGE SUPPLY
INSTRUCTION UNIT

TO HV SUPPLY UNIT

61

WAVELENGTH RANGE
NOTIFICATION UNIT

63

APPLIED VOLTAGE
CALCULATION UNIT

WAVELENGTH
SENSITIVITY
CHARACTERISTIC
STORAGE UNIT

71

REFERENCE VALUE
STORAGE UNIT

72

APPLIED VOLTAGE-
SENSITIVITY
CONDITION STORAGE
UNIT

73

11

F I G. 1 2

FLUORESCENCE CHARACTERISTIC OF FITC

F I G.  1 3

START

S101 — OBTAIN APPLIED VOLTAGE AT 520nm

S102 — OBTAIN PHOTOMULTIPLIER SENSITIVITY AT 520nm FROM STORAGE UNIT

S103 — OBTAIN WAVELENGTH AT TIME OF START OF DETECTION

S104 — OBTAIN PHOTOMULTIPLIER SENSITIVITY FOR WAVELENGTH AT TIME OF START OF DETECTION FROM STORAGE UNIT

S105 — OBTAIN OPTIMUM APPLIED VOLTAGE VALUE

S106 — SET OPTIMUM APPLIED VOLTAGE VALUE IN HV SUPPLY UNIT

END

F I G. 1 4

F I G. 1 5

F I G. 1 6

SUPPLIER OF PROGRAM
(DATA)

92

PROGRAM
(DATA)

NETWORK
CIRCUIT 93

COMPUTER 91

STORAGE DEVICE SUCH AS RAM,
ROM, HARD DISK OR THE LIKE

94

DISPLAY

PROGRAM
(DATA)

95

MEDIA DRIVE UNIT 97

TRANSPORTABLE STORAGE MEDIUM 96

PROGRAM (DATA)

CD-ROM

INSERT

FLEXIBLE
DISK

PROGRAM
(DATA)

F I G.   1 7

**European Patent Office**

**EUROPEAN SEARCH REPORT**

Application Number

EP 05 02 6864

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/006368 A1 (ENGELHARDT JOHANN ET AL) 9 January 2003 (2003-01-09)<br><br>* paragraphs [0009], [0022], [0023], [0025], [0026], [0031]; figures 1,2 *<br>----- | 1-3, 8-14,16, 18,20-23 | INV.<br>G01N21/64<br>G02B21/00 |
| X | US 2004/000639 A1 (STORZ RAFAEL) 1 January 2004 (2004-01-01)<br>* paragraphs [0003], [0017] - [0019], [0021], [0022] *<br>----- | 1,4-7, 15,17,19 | |
| X | US 2001/025930 A1 (ENGELHARDT JOHANN ET AL) 4 October 2001 (2001-10-04)<br>* paragraphs [0012], [0014] - [0024], [0028], [0034], [0039], [0054], [0059] *<br>----- | 1 | |
| X | JP 11 183806 A (NIKON CORP) 9 July 1999 (1999-07-09)<br>* paragraphs [0004], [0005], [0011] *<br>-& PATENT ABSTRACTS OF JAPAN vol. 1999, no. 12, 29 October 1999 (1999-10-29)<br>& JP 11 183806 A (NIKON CORP), 9 July 1999 (1999-07-09)<br>* abstract *<br>----- | 1 | TECHNICAL FIELDS SEARCHED (IPC)<br><br>G02B<br>G01N<br>G01J |
| A | WO 00/31576 A (LEICA MICROSYSTEMS HEIDELBERG GMBH; ENGELHARDT, JOHANN; SCHREIBER, FRA) 2 June 2000 (2000-06-02)<br>* the whole document *<br>----- | 1-23 | |
| A | US 2003/052280 A1 (FOSTER THOMAS H ET AL) 20 March 2003 (2003-03-20)<br>* the whole document *<br>----- | 1-23 | |

The present search report has been drawn up for all claims

| Place of search | Date of completion of the search | Examiner |
|---|---|---|
| The Hague | 10 April 2006 | Plouzennec, L |

**ANNEX TO THE EUROPEAN SEARCH REPORT**
**ON EUROPEAN PATENT APPLICATION NO.**                  EP 05 02 6864

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2006

| Patent document cited in search report | | Publication date | Patent family member(s) | | Publication date |
|---|---|---|---|---|---|
| US 2003006368 | A1 | 09-01-2003 | DE<br>EP | 10132638 A1<br>1273951 A1 | 16-01-2003<br>08-01-2003 |
| US 2004000639 | A1 | 01-01-2004 | DE | 10229407 A1 | 15-01-2004 |
| US 2001025930 | A1 | 04-10-2001 | DE<br>EP | 10015121 A1<br>1139139 A2 | 04-10-2001<br>04-10-2001 |
| JP 11183806 | A | 09-07-1999 | NONE | | |
| WO 0031576 | A | 02-06-2000 | AT<br>DE<br>EP<br>JP | 244414 T<br>19853407 A1<br>1131664 A1<br>2002530715 T | 15-07-2003<br>31-05-2000<br>12-09-2001<br>17-09-2002 |
| US 2003052280 | A1 | 20-03-2003 | US | 2005110994 A1 | 26-05-2005 |

EPO FORM P0459

For more details about this annex : see Official Journal of the European Patent Office, No. 12/82